# EUROPÄISCHE PATENTSCHRIFT

(11) **EP 3 350 120 B1**
(45) Veröffentlichungstag und Bekanntmachung des Hinweises auf die Patenterteilung: **10.04.2019**
(21) Anmeldenummer: 17764390.5
(22) Anmeldetag: 07.09.2017
(51) Int. Cl.: C01B 25/00, B01D 21/00, B09B 3/00, C01B 25/18, C02F 1/54

(54) **VERFAHREN ZUR RÜCKGEWINNUNG VON PHOSPHOR AUS PHOSPHORHALTIGER KLÄRSCHLAMMASCHE**
PROCESS FOR RECOVERING PHOSPHORUS FROM PHOSPHORUS CONTAINING SEWAGE SLUDGE ASH
PROCÉDÉ DE RÉCUPÉRATION DE PHOSPHORE À PARTIR DE CENDRES DE BOUES D'ÉPURATION CONTENANT DU PHOSPHORE

(30) Priorität: 07.09.2016 DE 102016010861
(43) Veröffentlichungstag der Anmeldung: 25.07.2018
(73) Patentinhaber: Herr, Patrick, 30167 Hannover (DE); Mayer, Wolfgang, 80689 München (DE); Mocker, Mario, 92224 Amberg (DE)
(72) Erfinder: Herr, Patrick, 30167 Hannover (DE); Mayer, Wolfgang, 80689 München (DE); Mocker, Mario, 92224 Amberg (DE)
(74) Vertreter: Zacco GmbH
(86) Internationale Anmeldenummer: PCT/EP2017/072514
(87) Internationale Veröffentlichungsnummer: WO 2018/046621

(56) Entgegenhaltungen:
- EP-A1- 2 602 013
- WO-A1-2014/178788
- DE-A1-102013 018 652

## Beschreibung

### GEBIET DER ERFINDUNG

Die vorliegende Erfindung bezieht sich allgemein auf ein Verfahren und eine Vorrichtung zur Phosphorrückgewinnung aus phosphorhaltigen Verbrennungsrückständen, insbesondere Klärschlammasche. Insbesondere bezieht sich die Erfindung auf ein Verfahren und eine Vorrichtung zur Extraktion von Phosphor aus phosphorhaltiger Klärschlammasche mittels Phosphorsäure.

### STAND DER TECHNIK UND HINTERGRUND DER ERFIDNUNG

Phosphor ist ein essenzieller Nährstoff für Menschen, Tiere und Pflanzen. Phosphorsäure ist ein wichtiges Vorprodukt für die Herstellung phosphorhaltiger Produkte wie zum Beispiel Phosphordünger, Nahrungsmittelzusätzen oder Detergenzien. Die weltweiten Phosphat-Vorkommen sind begrenzt. Daher rückt die Rückgewinnung des Wertstoffs Phosphor aus Reststoffen vermehrt in den Fokus. Ein vielversprechender phosphorhaltiger Reststoff für die Rückgewinnung ist die Asche aus Verbrennungsanlagen, insbesondere der Klärschlammverbrennung. Neben Phosphor enthalten Verbrennungsrückstände, insbesondere Klärschlammaschen, regelmäßig metallhaltige Verbindungen.

Beim konventionellen Verfahren der nasschemischen Phosphorsäureherstellung wird Phosphaterz in einem kontinuierlichen Prozess mit einer Mischung aus verdünnter Phosphor- und Schwefelsäure in einem Reaktor aufgeschlossen. Dabei beträgt die Reaktionszeit ca. 3-8 Stunden, typische Reaktionstemperaturen betragen 60°C-80°C. Anschließend wird die erhaltene, angereicherte Phosphorsäure vom Koppelprodukt Calciumsulfat-Dihydrat, auch Phosphorgips genannt, abgetrennt, das Koppelprodukt abgeschieden und Phosphorsäure erhöhter Konzentration erhalten.

Ein bekannter Ansatz, Phosphor aus Klärschlammasche zurückzugewinnen, ist die Mitverwertung von Klärschlammasche bei der konventionellen nasschemischen Phosphorsäureherstellung. Hierbei werden Klärschlammasche und Phosphaterz vermischt und gemeinsam in einen Reaktor gegeben. Dieses Vorgehen wird auch als Beimischung von Klärschlammasche zu Phosphaterz bezeichnet. Auch hierbei beträgt die Reaktionszeit ca. 3-8 Stunden, typische Reaktionstemperaturen betragen ebenfalls 60°C -80°C. Die Beimischungsquote liegt dabei bei ca. 2,5 Ma.-% Klärschlammasche zum Phosphaterz.

Weitere bekannte Ansätze Phosphor aus phosphorhaltigen Verbrennungsrückständen zurückzugewinnen sind in den Schutzrechten WO002015067328A1 und WO002015091946A1 sowie DE 10 2013 018 652 A1 und WO 2015/165481 A1 beschrieben. Hier wird der Verbrennungsrückstand mit einer sauren, phosphorhaltigen Extraktionslösung in Kontakt gebracht wodurch Phosphor aus der Asche gelöst wird und sich in der Extraktionslösung anreichert. Neben der erwünschten Freisetzung von Phosphor kommt es dabei unweigerlich zu einer unerwünschten Extraktion von Metallen. Es ist eine generelle Aufgabe von Recyclingverfahren eine möglichst vollstände Trennung von Wertstoffen und Begleitstoffen herbeizuführen. Dementsprechend haben Verfahren zu Rückgewinnung von Phosphor aus phosphorhaltigen Verbrennungsrückständen, insbesondere Klärschlammaschen, unter anderem die Aufgabe eine möglichst vollständige Trennung von Phosphor und anderen Aschebestandteilen, insbesondere Metallen, herbeizuführen.

Aufgabe der vorliegenden Erfindung ist es, eine verbessertes Verfahren und eine verbesserte Vorrichtung zur Phosphorrückgewinnung aus Klärschlammasche bereitzustellen. Insbesondere ist es Aufgabe der Erfindung, ein verbessertes Verfahren und eine verbesserte Vorrichtung zur Extraktion von Phosphor aus Klärschlammasche mittels Phosphorsäure bereitzustellen.

Die Aufgabe wird gelöst durch die Merkmale der Ansprüche 1 bis 10. Kern der Erfindung ist Erkenntnis, dass die Freisetzung von Phosphor aus phosphorhaltigen Verbrennungsrückständen, insbesondere Klärschlammaschen, beim Kontakt mit sauren Extraktionslösungen zum Großteil sehr schnell erfolgt, während die unerwünschten Metallfreisetzung erst bei längeren Extraktionsdauern verstärkt auftritt. Durch Einstellen von Extraktionsdauern, die kürzer sind als es dem Stand der Technik entspricht, kann daher ein günstiges Verhältnis zwischen Phosphorfreisetzung und Metallfreisetzung erreicht werden.

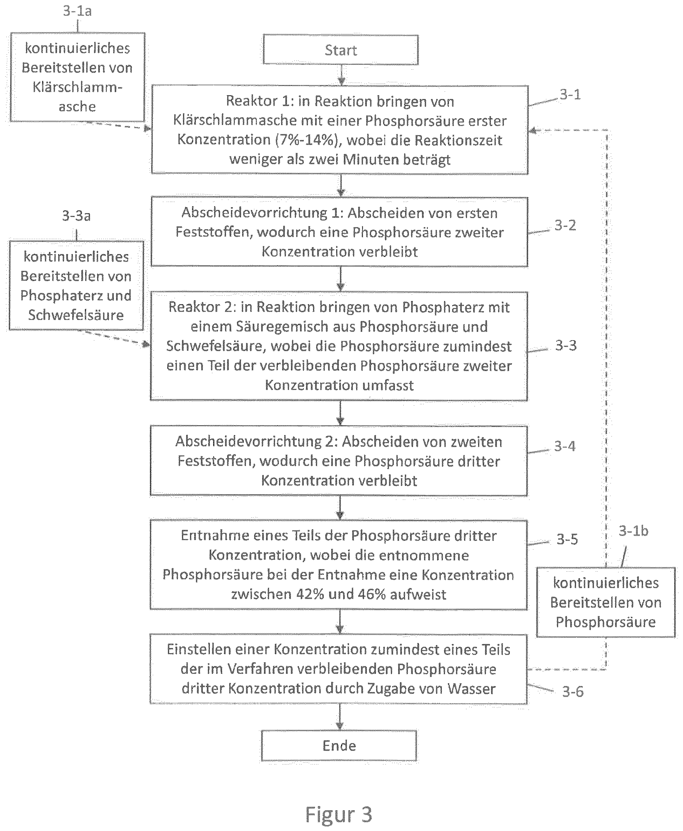

Es war nicht bekannt, dass Phosphor sehr schnell aus der Klärschlammasche extrahiert werden kann, während die unerwünschte Freisetzung von Metall deutlich langsamer erfolgt. Dies wird daran deutlich, dass in den meisten Veröffentlichungen, die sich mit der Extraktion von Phosphor aus Klärschlammasche beschäftigen, frühestens nach einer Reaktionszeit von 5 Minuten gemessen wird, Lediglich Beispiele sind Kleemann et al. Waste Management, (2016), Figure 3a ; or Xu et al., Journal of Environmental Sciences (2012), p. 1533-1538,

### KURZFASSUNG DER ERFINDUNG

Nach einem ersten Aspekt stellt die vorliegende Erfindung ein Verfahren zur Phosphorrückgewinnung aus phosphorhaltiger Klärschlammasche in Übereinstimmung mit dem Gegenstand des unabhängigen Anspruchs 1 bereit.

Nach einem zweiten Aspekt stellt die vorliegende Erfindung eine Vorrichtung zur Phosphorrückgewinnung aus phosphorhaltiger Klärschlammasche in Übereinstimmung mit dem Gegenstand des unabhängigen Anspruchs 10 bereit.

Weitere Aspekte und Merkmale bevorzugter Ausführungsbeispiele der Erfindung ergeben sich aus den abhängigen Ansprüchen, den beigefügten Figuren und der nachfolgenden Beschreibung.

### KURZBESCHREIBUNG DER ZEICHNUNG

Die Erfindung wird beispielhaft und unter Bezugnahme auf die beigefügten Figuren beschrieben. Dabei zeigen
Fig. 1a und 1b eine grafische Darstellung des Freisetzungsgrads von Phosphor und verschiedener Metalle bei der Reaktion von Klärschlammasche mit Phosphorsäure in Abhängigkeit von der Reaktionszeit;
Fig. 1c eine grafische Darstellung der Reduktion des Freisetzungsgrads von Phosphor und verschiedener Metalle bei der Reaktion von Klärschlammasche mit Phosphorsäure durch eine Verkürzung der Reaktionszeit von 45 min auf 1 min.
Fig. 2 eine grafische Darstellung des Freisetzungsgrads von Phosphor und verschiedener Metalle bei der Reaktion von Klärschlammasche mit Phosphorsäure in Abhängigkeit von der Konzentration der verwendeten Säure;
Fig. 3 ein Flussdiagramm eines Ausführungsbeispiel eines Verfahrens zur Phosphorrückgewinnung aus phosphorhaltiger Klärschlammasche; und
Fig. 4 eine schematische Darstellung eines Ausführungsbeispiels einer Vorrichtung zur Phosphorrückgewinnung aus phosphorhaltiger Klärschlammasche in Übereinstimmung mit der vorliegenden Erfindung.
Fig. 5 eine grafische Darstellung des Freisetzungsgrads von Phosphor (bzw. der dazu korrelierten Ca-Ionen) bei der Reaktion von Klärschlammasche mit Phosphorsäure in Abhängigkeit von der Temperatur (und der Zeit) zeigt.

### BESCHREIBUNG DER BEVORZUGTEN AUSFÜHRUNGSBEISPIELE

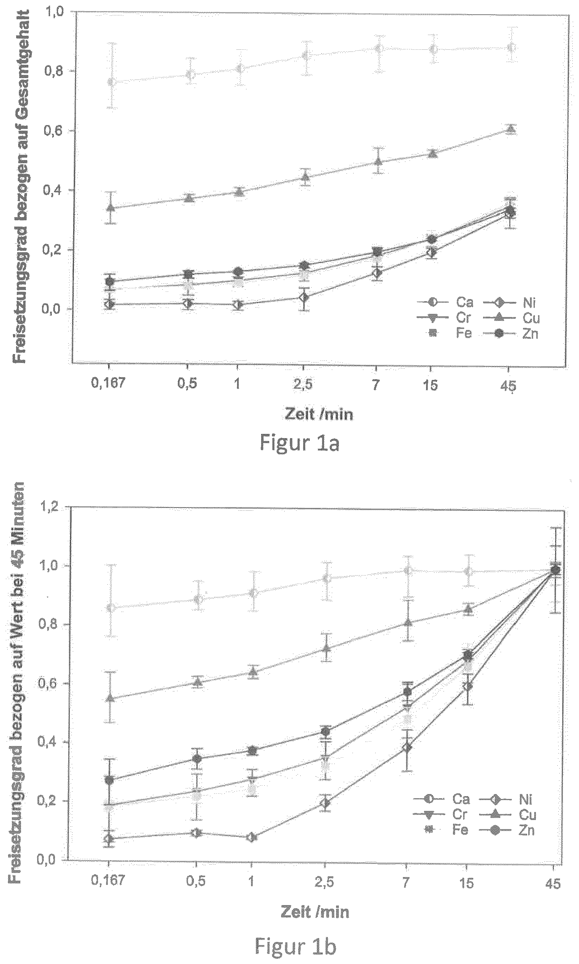

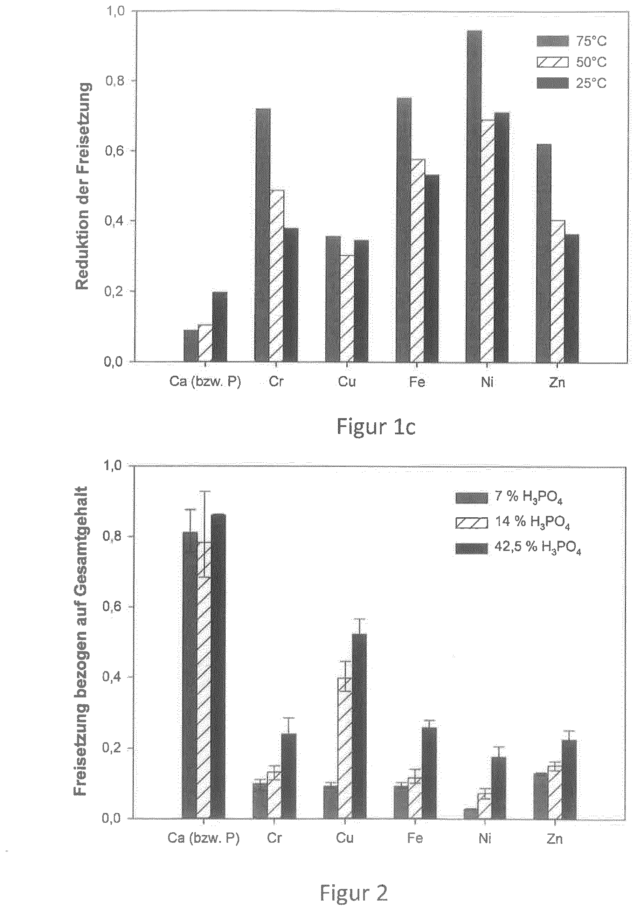

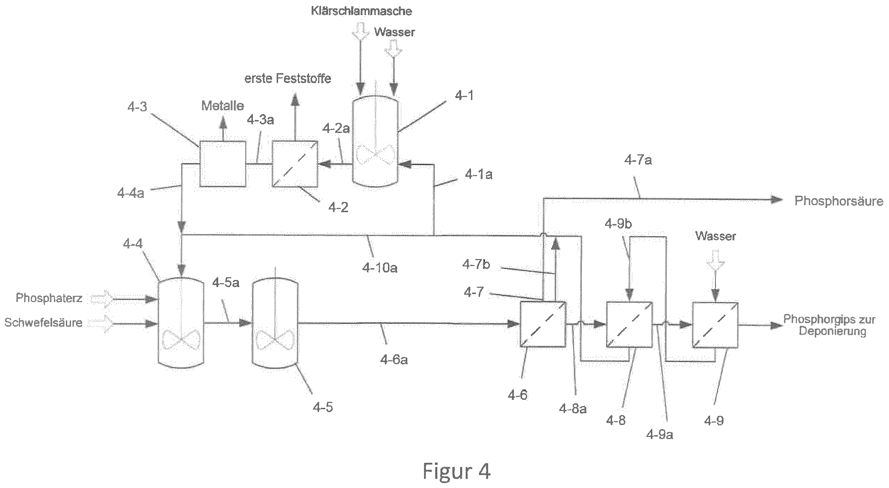

Die Figuren 3 und 4 veranschaulichen Ausführungsbeispiele eines Verfahrens und einer Vorrichtung zur Phosphorrückgewinnung aus phosphorhaltigen Verbrennungsrückständen, insbesondere Klärschlammasche. Vor einer detaillierten Beschreibung dieser Ausführungsbeispiele folgen zunächst einige allgemeine Erläuterungen unter Berücksichtigung der Figuren 1 und 2.

Die vorliegende Erfindung bezieht sich in einem ersten Aspekt auf ein Verfahren zur Phosphorrückgewinnung aus phosphorhaltiger Klärschlammasche.

Als phosphorhaltige Klärschlammasche werden im Rahmen der vorliegenden Erfindung alle phosphathaltigen Aschen aus Verbrennungsanlagen, insbesondere die bei der Verbrennung von Schlamm aus Kläranlagen entstehende Asche, verstanden.

Klärschlammasche aus der Verbrennung kommunaler Klärschlämme enthält neben einem signifikanten Anteil an Phosphor, typischerweise im Bereich von 6-13 Ma.-%, regelmäßig auch verschiedene Metalle. Insbesondere enthält Klärschlammasche regelmäßig neben Eisen (Fe) auch Schwermetalle wie z.B. Zink (Zn), Kupfer (Cu), Nickel (Ni) und Chrom (Cr).

Erfindungsgemäß wird Klärschlammasche mit einer Phosphorsäure (H₃PO₄) erster Konzentration in Reaktion gebracht. Dabei bezeichnet die erste Konzentration die Konzentration der Phosphorsäure vor Beginn der Reaktion mit der Klärschlammasche. Das in Reaktion bringen von Klärschlammasche mit Phosphorsäure wird auch als Aufschließen von Klärschlammasche, Extraktion von Phosphor aus der Klärschlammasche oder Lösen von Phosphor aus der Klärschlammasche bezeichnet. Der Reaktion von Klärschlammasche und Phosphorsäure liegt im Wesentlichen folgende chemische Reaktion zugrunde:

Ca₄Mg₅(PO4)₆ + 12 H₃PO₄ + 2H₂O → 18H₂(PO₄)⁻ + 4Ca²⁺ + 5Mg²⁺ + 2H₂O

Der Fachmann weiß, dass es sich bei obenstehender Reaktionsgleichung um eine starke Vereinfachung der tatsächlich ablaufenden Vorgänge handelt. Die obenstehende Reaktionsgleichung bezieht sich auf eine der wichtigsten phosphorhaltigen Mineralphasen in Klärschlammasche, Whitlockit, als Ausgangsmaterial.

Der aus der Klärschlammasche extrahierte Phosphor geht - wie aus der obenstehenden Formal ersichtlich - mit der Phosphorsäure erster Konzentration in Lösung. Dadurch erhöht sich die Konzentration der Phosphorsäure, sie wird "angereichert". Die vorliegende Konzentration der Phosphorsäure nach Abschluss der Reaktion mit der Klärschlammasche wird als zweite Konzentration bezeichnet. Durch das in Lösung gehen des aus der Klärschlammasche extrahierten Phosphors ist die zweite Konzentration höher als die erste Konzentration.

Ein Teil der Klärschlammasche geht nicht in Reaktion mit der Phosphorsäure. Ebenso können sich im Zuge der Reaktion feste Reaktionsprodukte bilden. Dies ist insbesondere bei Ausführungsbeispielen der Fall, bei denen neben der Phosphorsäure noch weitere Säuren, zum Beispiel Schwefelsäure, an der Reaktion mit der Klärschlammasche beteiligt sind. Die Gesamtheit der nach der Reaktion verbleibenden Feststoffe aus Klärschlammasche und festen Reaktionsprodukten wird als "erste Feststoffe" bezeichnet.

Die ersten Feststoffe werden erfindungsgemäß abgeschieden. Unter Abscheiden ist allgemein zu verstehen, dass die abgeschiedenen Stoffe nach der Abscheidung nicht mehr am Verfahren beteiligt sind. Dies kann durch ein physisches Entfernen der ersten Feststoffe aus der Vorrichtung geschehen, in der das Verfahren durchgeführt wird. Das Abscheiden erfolgt dabei nach der Beendigung der Reaktion der Klärschlammasche mit der Phosphorsäure. Durch den Abscheidevorgang verbleibt Phosphorsäure zweiter Konzentration im Verfahren. Die zweite Konzentration der Phosphorsäure ist dabei, wie bereits erwähnt, höher als die erste Konzentration.

In manchen Ausführungsbeispielen umfasst das Abscheiden der ersten Feststoffe eine Fest-Flüssig-Trennung, z.B. Filtration, Sedimentation oder eine Trennung per Zentrifuge. In manchen Ausführungsbeispielen findet die Abscheidung der ersten Feststoffe im selben Reaktor statt, in dem auch die Reaktion der Klärschlammasche mit der Phosphorsäure erster Konzentration stattgefunden hat. Dann kann die Phosphorsäure zweiter Konzentration im Reaktor verbleiben.

In anderen Ausführungsbeispielen wird eine Gesamtheit aus festen und flüssigen Bestandteilen aus dem Reaktor in eine räumlich getrennte Abscheidevorrichtung überführt. In dieser Abscheidevorrichtung findet dann das Abscheiden der ersten Feststoffe statt, zum Beispiel mittels der bereits erwähnten Fest-Flüssig-Trennung. Nach Abschluss des Abscheidevorgangs verbleibt die Phosphorsäure zweiter Konzentration dann in der Abscheidevorrichtung.

Erfindungsgemäß beträgt die Reaktionszeit der Klärschlammasche mit der Phosphorsäure weniger als 2 Minuten. In manchen Ausführungsbeispielen beträgt die Reaktionszeit zwischen 1 und 2 Minuten. Wiederum andere Ausführungsbeispiele sehen Reaktionszeiten von weniger als 1,5 Minuten, weniger als 1 Minute oder weniger als 30 Sekunden vor. Weitere Ausführungsbeispiele sehen Reaktionszeiten von weniger als 1,75 Minuten vor.

Wie bereits obenstehend erwähnt, enthält Klärschlammasche regelmäßig auch Metalle, so zum Beispiel Eisen. Insbesondere enthält die Klärschlammasche regelmäßig auch ökotoxologisch bedenkliche Schwermetalle wie z.B. Zink, Kupfer, Nickel und Chrom.

In der Klärschlammasche enthaltene Metalle werden bei der Reaktion der Klärschlammasche mit Phosphorsäure ebenfalls freigesetzt und verunreinigen die durch die Reaktion erhaltene Phosphorsäure zweiter Konzentration. Diese Verunreinigung ist zum Beispiel ein begrenzender Faktor der Beimischungsmenge bei der Mitverwertung von Klärschlammasche.

Die Erfinder haben erkannt, dass der in Klärschlammasche enthaltene Phosphor bei der Extraktion von Klärschlammasche mittels Phosphorsäure zeitlich sehr schnell zu einem Großteil in Lösung geht. Demgegenüber weisen die in der Klärschlammasche enthaltenen Metalle Chrom (Cr), Kupfer (Cu), Eisen (Fe), Nickel (Ni) und Zink (Zn) ein zeitlich verzögertes Extraktionsverhalten bei der Extraktion mittels Phosphorsäure auf. Erst bei einer längeren Reaktionszeit größer 2 Minuten gehen größere Mengen dieser Metalle im Zuge der Extraktion mit der Phosphorsäure in Lösung.

Die Figuren 1a und 1b stellen experimentell gewonnene Daten zu den Extraktionseigenschaften von in Klärschlammasche enthaltenem Phosphor und besagten Metallen bei der Extraktion mittels Phosphorsäure dar. Sie wurden bei der Extraktion einer realen Klärschlammasche mittels 7%iger Phosphorsäure (H₃PO₄) bei einer Temperatur von 75°C gewonnen. Die prozentuale Angabe bezieht sich dabei auf Massen-%, kurz Ma.-%, ebenso wie alle weiteren prozentualen Angaben, falls nicht explizit anders angegeben. Zur Minimierung der Messfehler wurden drei Messreihen mit Teilen der gleichen realen Klärschlammasche durchgeführt und ausgewertet. Die in den Figuren 1a und 1b dargestellten Messdaten repräsentieren die Mittelwerte der in den drei Messreihen gewonnenen Daten, wobei die Fehlerbalken jeweils die Minimal- bzw. Maximalwerte aus den drei Messreihen anzeigen.

Figur 1a stellt den Freisetzungsgrad (x-Achse; 1,0 entspricht einem Freisetzungsgrad von 100%) der bei der Reaktion von Klärschlammasche mit Phosphorsäure gelösten Metalle Chrom (Cr), Kupfer (Cu), Eisen (Fe), Nickel (Ni) und Zink (Zn) in Abhängigkeit zur Reaktionszeit (y-Achse, logarithmische Auftragung) dar. Ebenso wird die Menge des gelösten Calciums (Ca) in Abhängigkeit der Reaktionszeit angeben. Die Menge des gelösten Calciums dient als ein Indikator für die Menge des aus der Klärschlammasche gelösten Phosphors, wie untenstehend näher erläutert wird.

Als 100%-Referenz der aus der Klärschlammasche freigesetzten Elemente dient für die Figur 1a die bei einem Aufschluss der realen Klärschlammasche mit Königswasser freigesetzte Menge der jeweiligen Elemente, die sogenannte "königswasserlösliche Fraktion". Königswasser als ein Gemisch aus konzentrierter Salz- und Salpetersäure stellt eine starke Säure dar, die eine nahezu 100%ige Extraktion der jeweiligen Elemente aus der Klärschlammasche gewährleistet. Somit stellt die Figur 1a den Freisetzungsgrad der jeweiligen Elemente bezogen auf ihren in der Klärschlammasche befindlichen Gesamtgehalt dar. Ein Freisetzungsgrad von 100% bedeutet, dass das entsprechende Element vollständig aus der Klärschlammasche gelöst wurde.

Die Figur 1b stellt ebenfalls den Freisetzungsgrad (x-Achse; 1,0 entspricht einem Freisetzungsgrad von 100%) der bei der Reaktion von Klärschlammasche mit Phosphorsäure gelösten Metalle Chrom (Cr), Kupfer (Cu), Eisen(Fe), Nickel (Ni) und Zink (Zn) in Abhängigkeit zur Reaktionszeit (y-Achse, logarithmische Auftragung) dar. Ebenso wird die Menge des gelösten Calciums (Ca) in Abhängigkeit der Reaktionszeit angeben. Die Menge des gelösten Calciums dient dabei wiederum als ein Indikator für die Menge des aus der Klärschlammasche gelösten Phosphors, wie untenstehend näher erläutert wird.

Im Unterschied zur Figur 1a dient bei der Darstellung der Figur 1b nicht die gesamte in der Klärschlammasche enthaltene Menge eines Elements als 100%-Referenz. Vielmehr wird für die Darstellung der Figur 1b die nach einer Reaktionszeit von 45 Min freigesetzte Menge des entsprechenden Elements als 100%-Referenz herangezogen. Ein Freisetzungsgrad von 100% entspricht somit der nach 45 Min Reaktionszeit freigesetzten Menge des Elements. Durch diese Art der Darstellung der Messdaten wird das unterschiedliche Extraktionsverhalten von Phosphor (über seinen Indikator Ca) und der Metalle Chrom (Cr), Kupfer (Cu), Eisen(Fe), Nickel (Ni) und Zink (Zn) noch deutlicher sichtbar als in der Figur 1a.

Um den Einfluss einer imperfekten Durchmischung auf die Messung der Freisetzungsgrade zu eliminieren, wurde bei den Experimenten, aus denen die Daten der Figuren 1a und 1b gewonnen wurden, nur eine geringe Menge Klärschlammasche mit einer größeren Menge Phosphorsäure in Reaktion gebracht (2g Klärschlammasche auf 100ml Phosphorsäure). Diese im Verhältnis zur Phosphorsäure geringe Menge an Klärschlammasche führt dazu, dass selbst bei einer Phosphorfreisetzung von 100% aus der Klärschlammasche die Zunahme in der Konzentration der gesamten Phosphorsäure (sprich die Differenz zwischen der ersten und zweiten Konzentration der Phosphorsäure) nur relativ gering ist. Dies hat unbefriedigende Messungenauigkeiten bei der direkten Bestimmung des freigesetzten Phosphoranteils zur Folge.

Vorversuche zu den Figuren 1a und 1b dargestellten Messreihen, bei denen anstatt Phosphorsäure Salzsäure als Aufschlussmittel für die Klärschlammasche verwendet wurde, haben jedoch gezeigt, dass die zeitliche Freisetzung der Elemente Calcium und Phosphor sehr gut miteinander korreliert. Der freigesetzte Prozentsatz der Elemente Calcium und Phosphor über die Zeit ist nahezu identisch. Diese Feststellung war in den Vorversuchen problemlos möglich, da Salzsäure (HCl) sowohl phosphorals auch calciumfrei ist. Insgesamt kann der freigesetzte Anteil an Calcium über die Zeit in den Figuren 1a und 1b somit als guter Indikator für den freigesetzten Anteil an Phosphor begriffen werden.

Wie aus den experimentellen Daten der Figuren 1a und 1b hervorgeht, sind bereits nach einer Reaktionszeit von lediglich 10 Sekunden (0,167 Min) signifikante Anteile des Phosphors aus der Klärschlammasche extrahiert worden (knapp 80% in Fig. 1, über 80 % in Figur 2). Dahingegen sind bei einer Reaktionszeit von 10 Sekunden nur deutlich geringere Mengen der Metalle Cr, Cu, Fe, Ni und Zn in Lösung gegangen. So sind von Cu, dem sich am schnellsten lösenden Metall, nach 10 Sekunden nur weniger als 40% (Fig. 1a) bzw. weniger als 60% (Fig. 1b) gelöst. Von dem am schlechtesten löslichen dieser Metalle, Ni, sind nach 10 Sekunden sowohl in der Darstellung der Figur 1a als auch in der Darstellung der Figur 1b nur Mengen deutlich kleiner 10% gelöst.

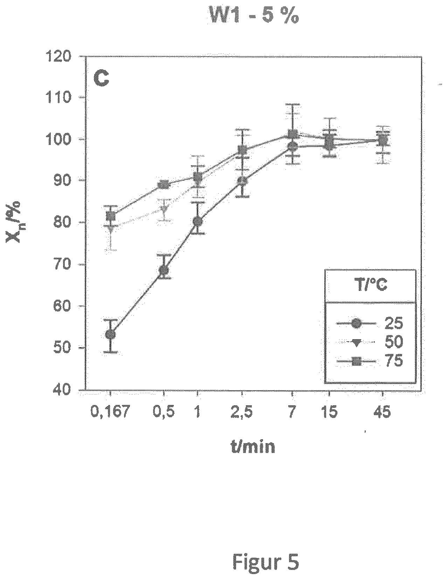

Ähnliches sieht man in Figur 5, die die Calciumfreisetzung (aus einer Wirbelschichtasche W1) bei verschiedenen Temperaturen bei einem Fest-Flüssig-Verhältnis 0,02 g/mL zeigt Wie man in Figur 5 sehen kann, sind auch bei einer niedrigeren Reaktionszeit von lediglich 25°C nach beispielsweise 1 oder 1,5 Minuten bereits signifikante Anteile des Phosphors bzw. der dazu korrelierten Ca-Ionen aus der Klärschlammasche extrahiert worden. Daher kann auch bei der Kombination von sehr kurzer Reaktionszeit und niedrigerer Temperatur bereits Phosphorsäure mit sehr geringen Metallbeimischungen extrahiert werden,

Mit Blick auf das zeitliche Extraktionsverhalten des Ni in den Figuren 1a und 1b erkennt man beispielsweise, dass erst ab einer Reaktionszeit von mehr als einer Minute eine verstärkte Freisetzung von Ni einsetzt. Somit ist eine Reaktionszeit von unter einer Minute insbesondere vorteilhaft, um gezielt die Freisetzung von Ni zu vermeiden.

Insgesamt belegen die in Fig.1a und b dargestellten Messdaten eindrucksvoll das zeitlich unterschiedliche Freisetzungsverhalten von Phosphor bzw. der Metalle Cr, Cu, Fe, Ni und Zn bei der Extraktion von phosphorhaltiger Klärschlammasche mittels Phosphorsäure.

Das zeitlich unterschiedliche Freisetzungsverhalten von Phosphor bzw. der Metalle Cr, Cu, Fe, Ni und Zn bei der Extraktion von phosphorhaltiger Klärschlammasche mittels Phosphorsäure wird ebenfalls mit Blick auf die Figur 1c bestätigt. Diese zeigt die prozentuale Reduktion der Freisetzung der verschiedenen Elemente aus Klärschlammasche bei der Extraktion mittels Phosphorsäure (7 Gew-% H₃PO₄). Dabei ist der Freisetzungsgrad bei einer Extraktionszeit von 45 min als 100% Referenz auf der y-Achse gewählt, während die Balken eine Reduktion der Freisetzung der verschiedenen Elemente gegenüber der 100 % - Referenz angeben für eine Extraktionszeit von nur 1 min. Eine Reduktion von 0% (i.e. 0,0 auf der y-Achse) würde somit bedeuten, dass vom betroffen Element bei 1 min Extraktionszeit der gleiche Anteil aus der Klärschlammasche gelöst wird wie bei einer Reaktionszeit von 45 min. Die Reduktion im Freisetzungsgrad zwischen 1 min und 45 min Reaktionszeit ist in Fig 1.c für drei verschiedene Reaktionstemperaturen, sprich Temperaturen der für die Reaktion verwendeten Phosphorsäure dargestellt.

Aus Fig. 1c wird ersichtlich, dass die Reduktion der Freisetzung von Phosphor nur um weniger als 20% reduziert wird bei einer Verkürzung der Reaktionszeit von 45 min auf 1 min. Demgegenüber ist eine Verringerung bei der Freisetzung von Metallen von knapp 40% bis über 90% zu erkennen, abhängig von den jeweiligen Metallen und Reaktionstemperaturen. Insgesamt belegt jedoch auch die Fig. 1c eindrucksvoll das zeitlich unterschiedliche Freisetzungsverhalten von Phosphor bzw. den Metallen Cr, Cu, Fe, Ni und Zn bei der Extraktion von phosphorhaltiger Klärschlammasche mittels Phosphorsäure.

Basierend auf diesem Unterschied im zeitlichen Freisetzungsverhalten haben die Erfinder erkannt, dass es vorteilhaft ist, bei einem Verfahren zur Phosphorrückgewinnung aus phosphorhaltiger Klärschlammasche kurze Reaktionszeiten für die Reaktion von Phosphorsäure und Klärschlammasche zu wählen. Dadurch lässt sich ein hoher Anteil des in der Klärschlammasche enthaltenen Phosphors extrahieren, während nur ein deutlich geringerer Anteil an Cr, Cu, Fe Ni und Zn aus der Klärschlammasche freigesetzt wird. Somit wird eine Verunreinigung der durch die Extraktion gewonnen angereicherten Phosphorsäue durch eine Metallfracht verringert und eine angereicherte Phosphorsäure von hoher Qualität gewonnen.

Unter Berücksichtigung der Gesamtheit der in den Figuren 1a bis c dargestellten Freisetzungsgrade der verschiedenen Metalle über die Zeit und unter Berücksichtigung der technischen Rahmenbedingungen der Phosphorrückgewinnung aus phosphorhaltigen Klärschlammasche haben die Erfinder erkannt, dass Reaktionszeiten der Reaktion von Klärschlammasche mit Phosphorsäure von unter 2 Minuten besonders vorteilhaft sind. Reaktionszeiten von unter 2 Minuten resultieren in einer angereicherten Phosphorsäure mit geringer Metallfracht, wobei dennoch ein hoher Prozentsatz des in der Klärschlammasche enthaltenen Phosphors extrahiert wird.

In manchen Ausführungsbeispielen weist die Phosphorsäure erster Konzentration, sprich die Phosphorsäure vor dem in Reaktion bringen mit der Klärschlammasche, eine Konzentration von 7 Gew-% bis 14 Ma.-% H₃PO₄ auf. Wie bereits mit Blick auf die Daten der Figuren 1a bis c, welche unter Verwendung einer 7 Ma.-%igen Phosphorsäure gewonnen wurden, zu erkennen ist, wird bei einer solchen Konzentration schon bei kurzen Reaktionszeiten ein hoher Prozentsatz an Phosphor aus der Klärschlammasche extrahiert, während nur geringe Mengen an Metall aus der Klärschlammasche ausgeschieden werden. Eine erste Konzentration der Phosphorsäure zwischen 7 Ma.-% und 14 Ma.-% hat sich als besonders geeignet herausgestellt, um eine angereicherte Phosphorsäure zweiter Konzentration von hoher Qualität und geringer Metallfracht zu erhalten.

Dies wird auch mit Blick auf die Figur 2 ersichtlich. Diese zeigt in einem Balkendiagramm den Freisetzungsgrad bezogen auf die Gesamtheit (königswasserlösliche Fraktion) der in einer realen Klärschlammasche enthaltenen Metalle Cr, Cu, Fe, Ni und Zn und von Phosphor (über Indikator Ca) jeweils für die Reaktion mit Phosphorsäuren dreierlei verschiedene Konzentrationen von 7 Ma.-%, 14 Ma.-% und 42.5 Ma.-% H₃PO₄. Die Reaktionszeit der Phosphorsäuren mit der Klärschlammasche betrug dabei jeweils eine Minute, die Temperatur der Säure betrug 75°C. Aus der in Figur 2 gezeigten Grafik geht klar hervor, dass der Freisetzungsgrad von Phosphor, abermals dargestellt über den Freisetzungsgrad des Phosphorindikators Calcium, bei der Extraktion aus Klärschlammasche nahezu unabhängig ist von der Konzentration der verwendeten Phosphorsäure. Unabhängig von der Konzentration gehen jeweils um die 80 Ma.-% des in der Klärschlammasche enthaltenen Phosphors in Lösung. Dahingegeben ist aus der Grafik der Figur 2 unmittelbar ersichtlich, dass die Menge der bei der Extraktion gelösten Metalle mit ansteigender Konzentration der Phosphorsäure ebenfalls ansteigt. Aus der Grafik der Figur 2 ergibt sich somit, insbesondere mit Blick auf die Freisetzungsgrade der Metalle Cr, Fe, Ni und Zn, dass Ausführungsbeispiele, die eine Phosphorsäure erster Konzentration von 7 Gew-% bis 14 Ma.-% H₃PO₄ verwenden, eine angereicherte Phosphorsäure zweiter Konzentration von nur geringer Metalllast erhalten.

In manchen Ausführungsbeispielen weist die Phosphorsäure erster Konzentration, sprich die Phosphorsäure vor dem in Reaktion bringen mit der Klärschlammasche, eine Konzentration von 5 Gew-% bis 10 Ma.-% H₃PO₄ auf. Diese Ausführungsbeispiele erhalten eine angereicherte Phosphorsäure zweiter Konzentration von nur geringer Metallast, die insbesondere nur einen sehr geringen Anteil an Cu-Metallen aufweist, wie sich mit Blick auf die Grafik der Figur 2 unmittelbar ergibt.

In manchen Ausführungsbeispielen weist die Phosphorsäure zweiter Konzentration, sprich die Phosphorsäure, die nach Abschluss der Reaktion mit der Klärschlammasche bzw. nach dem Abscheiden der ersten Feststoffe erhalten wird, eine Konzentration zwischen 14 Ma.-% bis 21 Ma.-% H₃PO₄ auf. Es hat sich herausgestellt, dass sich innerhalb dieses Fenster der zweiten Konzentration der Phosphorsäure qualitative hochwertige Phosphorsäuren zweiter Konzentration mit einer geringen Metallfracht gewinnen lassen. Dabei ist zu beachten, dass die zweite Konzentration der Phosphorsäure von der Menge der in Reaktion gebrachten Klärschlammasche, deren Phosphorgehalt, sowie von der ersten Konzentration der Phosphorsäure vor dem in Reaktion bringen mit der Klärschlammasche abhängt. Der Fachmann ist sich dieser Zusammenhänge bewusst und regelt die besagten Ausgangsparameter entsprechend, um die zweite Konzentration der Phosphorsäure wenn erwünscht in diesem Fenster einzustellen.

In manchen Ausführungsbeispielen beträgt die Reaktionstemperatur, sprich die Temperatur der Phosphorsäure erster Konzentration, in der die Klärschlammasche extrahiert wird, zwischen 50°C und 100°C, insbesondere zwischen 60°C und 90°C bzw. zwischen 70 und 80°C. In manchen Ausführungsbeispielen werden Reaktionstemperaturen von über 90°C, insbesondere von 90°C bis 100°C verwendet.

Es hat sich gezeigt, dass bei höheren Reaktionstemperaturen deutlich größere Mengen an Metallen bei der Extraktion von Klärschlammasche mittels Phosphorsäure in Lösung gehen als bei niedrigeren Reaktionstemperaturen. Dahingegen ist der Unterschied im gelösten Phosphor bei der Extraktion wesentlich schwächer temperaturabhängig. Dieser Zusammenhang kann z.B. auch der Figur 1c entnommen werden. Somit macht es insbesondere bei hohen Reaktionstemperaturen Sinn, kurze Reaktionszeiten von unter 2 Min zu wählen, um dennoch eine möglichst geringe Metallfracht in der angereicherten Phosphorsäure zweiter Konzentration zu erhalten. Hohe Reaktionstemperaturen können angebracht sein, falls das beschriebene Verfahren im Zusammenhang mit der bekannten nasschemischen Phosphorsäureherstellung angewandt wird.

In wiederum anderen Ausführungsbeispielen beträgt die Reaktionstemperatur bei der Extraktion von Phosphor aus Klärschlammasche mittels Phosphorsäure zwischen 10°C und 60°C, insbesondere zwischen 20°C und 50°C bzw. zwischen 30°C und 40°C. Manche Ausführungsbeispiele verwenden Reaktionstemperaturen von unter 20°C, insbesondere zwischen 5°C und 20°C. Andere Ausführungsbeispiele bei der Extraktion von Phosphor aus Klärschlammasche verwenden Reaktionstemperaturen von 20°C bis 40°C oder von 10°C bis 40°C oder unter 50°C.

Daher beträgt in einer Ausführungsform die Reaktionstemperatur bei der Reaktion der Klärschlammasche mit der Phosphorsäure zwischen 30°C und 40°C, oder unter 20°C, insbesondere zwischen 5°C und 20°C. Die Reaktionstemperatur bei der Reaktion der Klärschlammasche mit der Phosphorsäure kann in dieser Ausführungsform aber auch zwischen 30°C und 40°C, oder unter 20°C, insbesondere zwischen 5°C und 20°C oder zwischen 20°C und 40°C betragen.

Daher beträgt in einer Ausführungsform die Reaktionstemperatur bei der Reaktion der Klärschlammasche mit der Phosphorsäure zwischen 10°C und 60°C, insbesondere zwischen 20°C und 50°C oder 50°C. Die Reaktionstemperatur bei der Reaktion der Klärschlammasche mit der Phosphorsäure kann in dieser Ausführungsform aber auch zwischen 10°C und 60°C, insbesondere zwischen 20°C und 50°C, 20°C und 40°C oder 50°C. betragen.

Während der Unterschied im Extraktionsverhalten zwischen Metallen und Phosphor für hohe Temperaturen, wie obenstehend erwähnt, zunimmt, ist die absolute Menge an freigesetzten Metallen umso geringer, je geringer die gewählte Reaktionstemperatur ist (siehe Fig. 1c). Aus diesem Grund werden in Ausführungsbeispielen, die darauf abzielen, eine Phosphorsäure zweiter Konzentration mit sehr geringer Metallfracht zu erhalten, geringere Reaktionstemperaturen gewählt.

In manchen Ausführungsbeispielen ist das in Reaktion bringen der Klärschlammasche mit der Phosphorsäure erster Konzentration und das Abscheiden von ersten Feststoffen in einem ersten Teilverfahren umfasst. Ein zweites Teilverfahren umfasst in diesen Ausführungsbeispielen das in Reaktion bringen von Phosphaterz (Ca₃(PO₄)₂ Apatit) mit Phosphorsäure. Dabei umfasst die im zweiten Teilverfahren verwendete Phosphorsäure zumindest einen Teil der verbleibenden Phosphorsäure zweiter Konzentration des ersten Teilverfahrens. Ferner umfasst das zweite Teilverfahren das Abscheiden von zweiten Feststoffen, wodurch eine Phosphorsäure dritter Konzentration verbleibt, wobei die dritte Konzentration höher ist als die zweite Konzentration.

Bezüglich des ersten Teilverfahrens kann dabei auf die obenstehenden Aussagen verwiesen werden.

Im zweiten Teilverfahren wird Phosphaterz mit Phosphorsäure in Reaktion gebracht. Das in Reaktion bringen von Phosphaterz mit Phosphorsäure wird auch als Aufschließen von Phosphaterz, Extraktion von Phosphor aus dem Phosphaterz oder Lösen von Phosphor aus dem Phosphaterz bezeichnet. Der Reaktion von Phosphaterz und Phosphorsäure liegt im Wesentlichen folgende chemische Reaktion zugrunde:

[Ca₃(PO₄)₂ + 4H₃PO₄ → 6H₂PO₄⁻ + 3Ca²⁺]

Der Fachmann weiß, dass es sich bei obenstehender Reaktionsgleichung um eine starke Vereinfachung der tatsächlich ablaufenden Vorgänge handelt.

Der aus dem Phosphaterz extrahierte Phosphor geht dabei - wie aus der obenstehenden Formal ersichtlich - mit der Phosphorsäure in Lösung. Dadurch erhöht sich die Konzentration der Phosphorsäure, sie wird "angereichert". Die vorliegende Konzentration der Phosphorsäure nach Abschluss der Reaktion mit dem Phosphaterz wird als dritte Konzentration bezeichnet. Durch das in Lösung gehen des aus dem Phosphaterz extrahierten Phosphors ist die dritte Konzentration höher als die zweite Konzentration.

Ein Teil des Phosphaterz geht eventuell nicht in Reaktion mit der Phosphorsäure. Ebenso können sich im Zuge der Reaktion feste Reaktionsprodukte bilden. Dies ist insbesondere bei Ausführungsbeispielen der Fall, bei denen neben der Phosphorsäure noch weitere Säuren, zum Beispiel Schwefelsäure, an der Reaktion mit dem Phosphaterz beteiligt sind. Die Gesamtheit der nach der Reaktion verbleibenden Feststoffe aus Phosphaterz und festen Reaktionsprodukten wird als "zweite Feststoffe" bezeichnet.

Die zweiten Feststoffe werden abgeschieden. Unter Abscheiden ist allgemein zu verstehen, dass die abgeschiedenen Stoffe nach der Abscheidung nicht mehr am Verfahren beteiligt sind. Dies kann durch ein physisches Entfernen der ersten Feststoffe aus der Vorrichtung geschehen, in der das Verfahren durchgeführt wird. Das Abscheiden erfolgt dabei nach der Beendigung der Reaktion des Phosphaterz mit der Phosphorsäure. Durch den Abscheidevorgang verbleibt Phosphorsäure dritter Konzentration im Verfahren. Die dritte Konzentration ist, wie bereits erwähnt, höher als die zweite Konzentration.

In manchen Ausführungsbeispielen umfasst das Abscheiden der zweiten Feststoffe eine Fest-Flüssig-Trennung, z.B. Filtration, Sedimentation oder eine Trennung per Zentrifuge. In manchen Ausführungsbeispielen findet die Abscheidung der zweiten Feststoffe im selben Reaktor statt, in dem auch die Reaktion des Phosphaterzes mit der Phosphorsäure stattgefunden hat. Dann kann die Phosphorsäure dritter Konzentration im Reaktor verbleiben.

In anderen Ausführungsbeispielen wird eine Gesamtheit aus festen und flüssigen Bestandteilen aus dem Reaktor der Reaktion von Phosphaterz und Phosphorsäure zweiter Konzentration in eine räumlich getrennte Abscheidevorrichtung überführt. In dieser Abscheidevorrichtung findet dann das Abscheiden der zweiten Feststoffe statt, zum Beispiel mittels der bereits erwähnten Fest-Flüssig-Trennung. Nach Abschluss des Abscheidevorgangs kann die Phosphorsäure dritter Konzentration dann in der Abscheidevorrichtung verbleiben.

In manchen Ausführungsbeispielen wird im zweiten Teilverfahren ausschließlich die Phosphorsäure zweiter Konzentration aus dem ersten Teilverfahren, im Gesamten oder ein Teil davon, als Ausgangssäure verwendet, um Phosphor aus dem Phosphaterz zu extrahieren.

In anderen Ausführungsbeispielen wird die Phosphorsäure zweiter Konzentration, im Gesamten oder ein Teil davon, mit zusätzlicher Phosphorsäure zusammengeführt. Das Gemisch aus der Phosphorsäure zweiter Konzentration aus dem ersten Teilverfahren und der zusätzlichen Phosphorsäure wird dann als Ausgangssäure zur Extraktion von Phosphor aus dem Phosphaterz im zweiten Teilverfahren verwendet.

In manchen Ausführungsbeispielen entspricht die Konzentration der zusätzlichen Phosphorsäure der Konzentration der Phosphorsäure zweiter Konzentration aus dem ersten Teilverfahren. In anderen Ausführungsbeispielen unterscheidet sich die Konzentration der zusätzlichen Phosphorsäure von der Konzentration der Phosphorsäure zweiter Konzentration aus dem ersten Teilverfahren. In manchen Ausführungsbeispielen wird die Konzentration und/oder Menge der zusätzlichen Phosphorsäure so gewählt, dass die Konzentration des Gemischs aus der zusätzlichen Phosphorsäure und der Phosphorsäure zweiter Konzentration aus dem ersten Teilverfahren eine Konzentration von 21 Ma.-% bis 42 Ma.-% H₃PO₄ aufweist. In manchen Ausführungsbeispielen wird Wasser zu der Phosphorsäure zweiter Konzentration bzw. zu dem Gemisch aus Phosphorsäure zweiter Konzentration und zusätzlicher Phosphorsäure gegeben, um die Konzentration der so entstehenden Phosphorsäure einzustellen.

In manchen Ausführungsbeispielen weist die Phosphorsäure dritter Konzentration, die im zweiten Teilverfahren durch die Extraktion von Phosphor aus Phosphaterz erhalten wird, eine Konzentration zwischen 42 Ma.-% und 46 Ma.-% auf. Dabei ist zu beachten, dass die Konzentration der Phosphorsäure dritter Konzentration von der Menge des im zweiten Teilverfahren in Reaktion gebrachten Phosphaterz, dessen Phosphorgehalt, sowie von der Konzentration der Phosphorsäure bzw. des Phosphorsäure zweiter Konzentration umfassenden Gemischs, welches als Ausgangssäure für die Extraktion des Phosphors aus Phosphaterz im zweiten Teilverfahren verwendet wird, abhängt. Der Fachmann ist sich dieser Zusammenhänge bewusst und regelt die besagten Ausgangsparameter entsprechend, um die dritte Konzentration der Phosphorsäure, wenn erwünscht, in diesem Fenster einzustellen.

In manchen Ausführungsbeispielen wird im zweiten Teilverfahren das Phosphaterz mit einer weiteren Säure, insbesondere Schwefelsäure, zusammen mit der Phosphorsäure in Reaktion gebracht. Insbesondere, falls ein Gemisch aus Schwefelsäure und Phosphorsäure verwendet wird, kann sich im Zuge der Reaktion Calciumsulfat-Dihydrat (Phosphorgips) als festes Reaktionsprodukt bilden. Dies wird unmittelbar aus der zugrundeliegenden Reaktionsgleichung ersichtlich:

Ca₃(PO₄)₂ + 3 H₂SO₄ + 6H₂O → 2H₃PO₄ + 3CaSO₄·2H₂O

Der Fachmann weiß, dass es sich bei obenstehender Reaktionsgleichung um eine starke Vereinfachung der tatsächlich ablaufenden Vorgänge handelt.

In manchen Ausführungsbeispielen wird der entstehende Phosphorgips als Bestandteil der zweiten Feststoffe aus dem Verfahren abgeschieden.

In manchen Ausführungsbeispielen werden die Reaktionen des ersten und des zweiten Teilverfahrens in verschiedenen Reaktoren durchgeführt. Dazu findet die Extraktion von Phosphor aus Klärschlammasche durch die Phosphorsäure erster Konzentration in einem ersten Reaktor statt. Die aufgrund der Extraktion erhaltene angereicherte Phosphorsäure zweiter Konzentration wird dann, zusammen mit den ersten Feststoffen oder nach Abscheiden der ersten Feststoffe, in einen zweiten Reaktor überführt. In manchen Ausführungsbeispielen wird im Zuge der Überführung oder im zweiten Reaktor zusätzliche Phosphorsäure zu der Phosphorsäure zweiter Konzentration hinzugegeben, so dass ein Säuregemisch entsteht. Im zweiten Reaktor findet dann die Extraktion des Phosphors aus dem Phosphaterz statt. Anschließend werden die verbleibenden ersten und/oder zweiten Feststoffe abgeschieden.

In manchen Ausführungsbeispielen ist das beschriebene Verfahren als kontinuierliches Verfahren ausgebildet. Dabei werden die Ausgangsstoffe der Reaktion kontinuierlich bereitgestellt. Ebenso wird zumindest ein Teil der Phosphorsäure dem Verfahren kontinuierlich entnommen.

In manchen Ausführungsbeispielen weist das kontinuierliche Verfahren, wie obenstehend beschrieben, ein erstes Teilverfahren und ein zweites Teilverfahren auf. Dabei werden dem ersten Teilverfahren bzw. dem Reaktor des ersten Teilverfahrens kontinuierlich Klärschlammasche und Phosphorsäure erster Konzentration zugeführt. In manchen Ausführungsbeispielen wird die Konzentration der an der Extraktion der Klärschlammasche beteiligten Phosphorsäure erst im Reaktor selbst, z.B. durch Zugabe von Wasser, auf eine erste Konzentration eingestellt. Ebenso wird dem zweiten Teilverfahren bzw. dem Reaktor des zweiten Teilverfahrens kontinuierlich Phosphaterz und Phosphorsäure bereitgestellt. Dabei umfasst die dem zweiten Teilverfahren bereitgestellte Phosphorsäure in manchen Ausführungsbeispielen zumindest einen Teil Phosphorsäure zweiter Konzentration des ersten Teilverfahrens. In manchen Ausführungsbeispielen wird die Phosphorsäure zweiter Konzentration aus dem ersten Teilverfahren dem zweiten Teilverfahren mittels einer Fließverbindung, die z.B. durch Rohre, Kanäle oder ähnliches ausgebildet sein kann, bereitgestellt. Dies kann der Fall sein, wenn die Reaktionen des ersten und zweiten Teilverfahrens nicht im selben Reaktor stattfinden. In manchen Ausführungsbeispielen wird die Konzentration der im zweiten Teilverfahren verwendeten Phosphorsäure erst im Reaktor selbst, z.B. durch Zugabe von Wasser, eingestellt.

In manchen Ausführungsbeispielen, die, wie obenstehend beschrieben, ein erstes und ein zweites Teilverfahren aufweisen, wird zumindest ein Teil der Phosphorsäure dritter Konzentration, die nach Abschluss des zweiten Teilverfahrens erhaltenen wird, dem Verfahren kontinuierlich entnommen. In manchen Ausführungsbeispielen ist zumindest ein Teil der nicht dem Verfahren entnommenen Phosphorsäure dritter Konzentration in der Phosphorsäure erster Konzentration umfasst, die dem ersten Teilverfahren zugeführt wird zum Zwecke der Extraktion von Phosphor aus Klärschlammasche. Durch die Verwendung zumindest eines Teils der Phosphorsäure dritter Konzentration in der Phosphorsäure erster Konzentration des ersten Teilverfahrens bildet das Verfahren insgesamt einen Kreislauf aus. In Ausführungsbeispielen, bei denen die Ausgangsstoffe der Reaktionen kontinuierlich zugeführt werden, bildet das Verfahren einen kontinuierlichen Kreislauf aus. Die einzelnen für die Verfahrensschritte notwendigen Vorrichtungen sind dabei fließend in Kommunikation. Diese kann beispielsweise über ein Rohrsystem, ein Kanalsystem oder ähnliches erfolgen.

In manchen Ausführungsbeispielen, die einen Kreislauf ausbilden, wird zumindest ein Teil der Phosphorsäure dritter Konzentration, der dem Verfahren nicht entnommen wird, z.B. durch Zugabe von Wasser so in der Konzentration verändert, dass er der Konzentration der Phosphorsäure erster Konzentration aus dem ersten Teilverfahren entspricht. Somit wird dieser Teil der Phosphorsäure dritter Konzentration in die Phosphorsäure erster Konzentration überführt. In manchen Ausführungsbeispielen erfolgt die Überführung der Phosphorsäure dritter Konzentration in Phosphorsäure erster Konzentration, z.B. durch Zugabe von Wasser, erst im Reaktor des ersten Teilverfahrens.

In manchen Ausführungsbeispielen, die, wie obenstehend beschrieben, ein erstes und ein zweites Teilverfahren umfassen und einen Kreislauf ausbilden, wird zumindest ein Teil der Phosphorsäure dritter Konzentration, der dem Verfahren nicht entnommen wird, mit weiterer Phosphorsäure zusammengeführt. Zumindest ein Teil des so entstehenden Gemischs aus Phosphorsäure dritter Konzentration und der weiteren Phosphorsäure wird, z.B. durch Zugabe von Wasser, in Phosphorsäure erster Konzentration überführt und dem ersten Teilverfahren zur Extraktion von Phosphor aus Klärschlammasche zugeführt. In manchen Ausführungsbeispielen weist die weitere Phosphorsäure eine Konzentration zwischen 21 Ma.-% und 42 Ma.-% H₃PO₄ auf.

Die vorliegende Erfindung bezieht sich in einem zweiten Aspekt auf eine Vorrichtung zur Phosphorrückgewinnung aus phosphorhaltiger Klärschlammasche.

Die erfindungsgemäße Vorrichtung umfasst einen ersten Reaktor zum in Reaktion bringen der Klärschlammasche mit einer Phosphorsäure erster Konzentration. Ferner umfasst sie eine erste Abscheidevorrichtung zum Abscheiden von ersten Feststoffen. Durch das Abscheiden in der Abscheidevorrichtung verbleibt eine Phosphorsäure zweiter Konzentration in dieser. Der erste Reaktor und die erste Abscheidevorrichtung können räumlich zusammenfallen. In manchen Ausführungsbeispielen bildet der erste Reaktor ebenfalls eine erste Abscheidevorrichtung aus. In anderen Ausführungsbeispielen hingegen sind der erste Reaktor und die erste Abscheidevorrichtung separate Bauteile und räumlich voneinander getrennt. Jedoch sind sie dann über eine Fließverbindung, z.B. einen Kanal oder ein Rohr miteinander verbunden.

Ferner umfasst die erfindungsgemäße Vorrichtung einen vom ersten Reaktor verschiedenen zweiten Reaktor. Dieser zweite Reaktor ist geeignet, um darin Phosphaterz mit Phosphorsäure in Reaktion zu bringen. Der zweite Reaktor ist so eingerichtet, dass die Phosphorsäure dabei zumindest einen Teil der verbleibenden Phosphorsäure zweiter Konzentration aus der ersten Abscheidevorrichtung umfasst. Die erste Abscheidevorrichtung und der zweite Reaktor sind über eine Fließverbindung, z.B. einen Kanal oder ein Rohr, miteinander verbunden. Über die Fließverbindung kann Phosphorsäure zweiter Konzentration von der ersten Abscheidevorrichtung in den zweiten Reaktor überführt werden.

Erfindungsgemäß ist ebenso eine zweite Abscheidevorrichtung vorgesehen. Diese dient zum Abscheiden von zweiten Feststoffen. Durch das Abscheiden von zweiten Feststoffen verbleibt eine Phosphorsäure dritter Konzentration in dieser. Der zweite Reaktor und die zweite Abscheidevorrichtung können räumlich zusammenfallen. In manchen Ausführungsbeispielen bildet der zweite Reaktor ebenfalls eine zweite Abscheidevorrichtung aus. In anderen Ausführungsbeispielen hingegen sind der zweite Reaktor und die zweite Abscheidevorrichtung separate Bauteile und räumlich voneinander getrennt. Jedoch sind sie dann über eine Fließverbindung, z.B. einen Kanal oder ein Rohr miteinander verbunden.

Auch eine Entnahmevorrichtung ist in der erfindungsgemäßen Vorrichtung umfasst. Diese dient der zumindest teilweisen Entnahme der Phosphorsäure dritter Konzentration. Die Entnahmevorrichtung steht in Fließverbindung mit der zweiten Abscheidevorrichtung, z.B. über ein Rohr bzw. einen Kanal. In manchen Ausführungsbeispielen umfasst die Entnahmevorrichtung ein ableitendes Rohr/Rohrsystem bzw. einen ableitenden Kanal/Kanalsystem, welches direkt an der zweiten Abscheidevorrichtung angeordnet ist.

Insgesamt stehen der erste Reaktor, die erste Abscheidevorrichtung, der zweite Reaktor, die zweite Abscheidevorrichtung und die Entnahmevorrichtung der erfindungsgemäßen Vorrichtung miteinander in Fließverbindung. Somit bildet die erfindungsgemäße Vorrichtung einen Kreislauf aus, entlang dem Flüssigkeiten, insbesondere Phosphorsäure, und/oder Feststoffe zumindest teilweise zwischen den einzelnen Vorrichtungen entlang fließen können. Der ausgebildete Kreislauf der Vorrichtung ermöglicht es insbesondere, dass zumindest ein Teil der Phosphorsäure dritter Konzentration, die in der zweiten Abscheidevorrichtung verbleibt, dem ersten Reaktor über die ausgebildeten Fließverbindungen zugeführt werden kann. Somit kann die Phosphorsäure erster Konzentration des ersten Reaktors zumindest einen Teil der an der Entnahmevorrichtung nicht entnommenen Phosphorsäure dritter Konzentration aus der zweiten Abscheidevorrichtung umfassen.

Zurückkommend zu den Figuren veranschaulichen die Fig. 3 bzw. 4 ein Ausführungsbeispiel eines Verfahrens zur Phosphorrückgewinnung bzw. einer Vorrichtung zur Phosphorrückgewinnung.

Figur 3 zeigt ein Ausführungsbeispiel eines Verfahrens zur Phosphorrückgewinnung aus phosphorhaltiger Klärschlammasche. In 3-1 wird die Klärschlammasche, aus der der Phosphor zurückgewonnen werden soll, in einem ersten Reaktor, Reaktor 1, mit einer Phosphorsäure erster Konzentration in Reaktion gebracht. Dabei beträgt die erste Konzentration zwischen 7 Ma.-% und 14 Ma.-%. Die Reaktionszeit der Klärschlammasche mit der Phosphorsäure beträgt weniger als zwei Minuten.

In Anschluss an die Reaktion von Klärschlammasche und Phosphorsäure werden die Gesamtheit der sich im ersten Reaktor befindlichen Reaktionsprodukte und nichtreagierte Bestandteile (fachsprachlich "Slurry" oder "Aufschlämmung" genannt), die sich sowohl aus festen als auch aus flüssigen Bestandteilen zusammensetzen, in die erste Abscheidevorrichtung, Abscheidevorrichtung 1, die mit dem ersten Reaktor in Fließverbindung steht, überführt (nicht in Figur 3 dargestellt).

In 3-2 werden in der ersten Abscheidevorrichtung mittels einer Fest-Flüssig-Trennung die festen Bestandteile des Slurry von den flüssigen getrennt und die Gesamtheit der festen Bestandteile, erste Feststoffe genannt, abgeschieden. Dadurch verbleibt eine Phosphorsäure zweiter Konzentration in der zweiten Abscheidevorrichtung. Durch die Extraktion des Phosphors aus der Klärschlammasche ist die verbleibende zweite Konzentration der Phosphorsäure höher als die erste Konzentration der Phosphorsäure.

Die verbleibende Phosphorsäure zweiter Konzentration wird im Anschluss in einen zweiten Reaktor, Reaktor 2 überführt, der mit der ersten Abscheidevorrichtung in Fließverbindung steht (nicht in Figur 3 dargestellt). Dabei wird die Phosphorsäure zweiter Konzentration während der Überführung mit einer zusätzlichen Phosphorsäure zusammengeführt. Das Gemisch aus Phosphorsäure zweiter Konzentration und zusätzlicher Phosphorsäure wird dabei so gewählt, dass es insgesamt eine Konzentration von 21 Ma.-% bis 42 Ma.-% aufweist.

In 3-3 wird das Phosphorsäuregemisch, das die Phosphorsäure zweiter Konzentration umfasst, mit Phosphaterz im zweiten Reaktor in Reaktion gebracht. Ebenso wird dem Reaktor Schwefelsäure zugeführt, so dass insgesamt ein Säuregemisch aus Phosphorsäure und Schwefelsäure mit dem Phosphaterz in Reaktion gebracht wird. Durch das in Reaktion bringen wird Phosphor aus dem Phosphaterz extrahiert. Ferner kann sich Phosphorgips als festes Kopplungsprodukt der Reaktion bilden. Das nach der Reaktion im zweiten Reaktor ausgebildete Slurry wird im Anschluss an die Reaktion in eine zweite Abscheidevorrichtung, Abscheidevorrichtung 2, überführt.

In 3-4 werden in der zweiten Abscheidevorrichtung mittels einer Fest-Flüssig-Trennung die festen Bestandteile des Slurry von den flüssigen getrennt und die Gesamtheit der festen Bestandteile, zweite Feststoffe genannt, abgeschieden. Dadurch verbleibt eine Phosphorsäure dritter Konzentration in der zweiten Abscheidevorrichtung. Durch die Extraktion des Phosphors aus der Klärschlammasche ist die verbleibende dritte Konzentration der Phosphorsäure höher als die zweite Konzentration der Phosphorsäure. Die Konzentration der dritten Phosphorsäure beträgt zwischen 42 Ma.-% und 46 Ma.-%.

In 3-5 wird mittels einer Entnahmevorrichtung ein Teil der Phosphorsäure dritter Konzentration aus dem Verfahren entnommen. Die Entnahmevorrichtung ist dabei direkt an der zweiten Abscheidevorrichtung angeordnet und steht mit dieser in Fließverbindung.

In 3-6 wird zumindest ein Teil des im Verfahren verbleibenden Teils der Phosphorsäure dritter Konzentration mit Wasser verdünnt. Es wird so viel Wasser zugegeben, bis die Konzentration der Phosphorsäure dritter Konzentration auf 7 Ma.-% bis 14 Ma.-% reduziert ist. Durch die Zugabe von Wasser wird die Phosphorsäure dritter Konzentration somit in eine Phosphorsäure erster Konzentration überführt.

Insgesamt bildet das Verfahren nach Figur 3 einen kontinuierlichen Kreislauf aus.

Dies wird dadurch erreicht, dass in 3-1 b dem Verfahren kontinuierlich von außen Klärschlammasche für die in 3-1 beschriebene Reaktion bereitgestellt wird und im Schritt 3-3a dem Verfahren kontinuierlich von außen Phosphaterz und Schwefelsäure bereitgestellt werden.

Ebenso wird die in 3-6 verdünnte Phosphorsäure dritter Konzentration, die durch die Verdünnung in eine Phosphorsäure erster Konzentration überführt wurde, kontinuierlich zu der in 3-1 dargestellten Reaktion zurückgeführt. Durch diese Rückführung bildet das Verfahren nach Figur 1 einen Kreislauf aus. Dabei kann die Verdünnung der Phosphorsäure dritter Konzentration auch erst im ersten Reaktor selbst stattfinden.

Figur 4 zeigt ein Ausführungsbeispiel einer Vorrichtung zur Phosphorrückgewinnung aus phosphorhaltiger Klärschlammasche. Die Vorrichtung umfasst eine Vielzahl von Bauteilen, die im Folgenden näher beschrieben werden.

Alle Bauteile der Vorrichtung stehen miteinander über ein Leitungssystem in Fließverbindung; das Leitungssystem umfasst eine Vielzahl von Leitungsverbindungen. Über das Leitungssystem können Flüssigkeiten und/oder Feststoffe von einem Bauteil in ein nächstes Bauteil überführt werden. Insgesamt bildet das Leitungssystem zusammen mit den Bauteilen der Vorrichtung einen Kreislauf aus, entlang dem Flüssigkeiten und/oder Feststoffe zirkulieren können. Der Kreislauf weist eine Entnahmestelle für Phosphorsäure auf, über welche Phosphorsäure aus der Vorrichtung entnommen werden kann. Manche Ausführungsbeispiele sehen auch mehrere Entnahmestellen vor. Die in Figur 4 dargestellte Vorrichtung ist geeignet, um in ihr das mit Blick auf Figur 3 beschriebene Verfahren zur Phosphorrückgewinnung aus phosphorhaltiger Klärschlammasche durchzuführen. Insgesamt bildet die in Figur 4 dargestellte Vorrichtung einen kontinuierlichen Kreislauf zur Phosphorrückgewinnung aus.

Bezugszeichen 4-1 bezeichnet einen ersten Reaktor. Dieser ist so eingerichtet, dass ihm von außen sowohl Klärschlammasche als auch Wasser zugeführt werden kann, wie durch die entsprechenden Pfeile in Figur 4 dargestellt. Ebenso ist der Reaktor 4-1 so eingerichtet, dass ihm Phosphorsäure zugeführt werden kann über die Leitungsverbindung 4-1a. Die Zuführung von Klärschlammasche und Phosphorsäure dient dem Erzeugen einer Reaktion zwischen diesen Ausgangsstoffen im Reaktor 4-1. Dabei soll die Konzentration der mit der Klärschlammasche in Reaktion gebrachten Phosphorsäure einen ersten Wert, vorgehend erste Konzentration genannt, aufweisen. Die Möglichkeit der Wasserzufuhr in den Reaktor 4-1 dient dem Zweck, eine Einstellung der über die Leitungsverbindung 4-1a in den Reaktor 4-1 zugeführten Phosphorsäure auf diese erste Konzentration zu ermöglichen. Falls die über das Leitungssystem 4-1a zugeführte Phosphorsäure eine höhere als die vorgesehene erste Konzentration aufweist, kann so lange Wasser in den Reaktor zugeführt werden, bis sich die Konzentration der Phosphorsäure auf den vorgesehenen ersten Wert der Konzentration der Phosphorsäure einstellt. Als Ergebnis der Reaktion im ersten Reaktor werden sowohl eine angereicherte Phosphorsäure zweiter Konzentration als auch erste Feststoffe erhalten.

Der erste Reaktor 4-1 ist über eine Leitungsverbindung 4-2a mit der ersten Abscheidevorrichtung 4-2 verbunden. Diese umfasst eine Vorrichtung zur Fest-Flüssig-Trennung. In manchen Ausführungsbeispielen ist die Vorrichtung zur Fest-Flüssigtrennung als Filtrationsvorrichtung, Sedimentationsvorrichtung oder Zentrifuge ausgebildet. Die Abscheidevorrichtung 4-2 ist geeignet, die über die Leitungsverbindung 4-2a erhaltenen ersten Feststoffe von der ebenfalls über die Leitungsverbindung erhaltenen Phosphorsäure zweiter Konzentration sowie von möglicherweise vorhandenen anderen Flüssigkeiten zu trennen und die ersten Feststoffe abzuscheiden. Nach der Abscheidung der ersten Feststoffe aus der Vorrichtung verbleibt in dieser die Phosphorsäure zweiter Konzentration.

Die erste Abscheidevorrichtung 4-2 ist über eine Leitungsverbindung 4-3a mit einer Metallabtrennungsvorrichtung 4-3 verbunden. Die Metallabtrennungsvorrichtung 4-3 ist geeignet, um Metalle aus der Phosphorsäure zweiter Konzentration, die sie über die Leitungsverbindung 4-3a erhält, abzutrennen und abzuscheiden. Somit ist die Metallabtrennungsvorrichtung 4-3 geeignet, um eine von einer Metallfracht gereinigte Phosphorsäure zweiter Konzentration zu erzeugen. In manchen Ausführungsbeispielen ist die Metallabtrennungsvorrichtung 4-3 in der ersten Abscheidevorrichtung 4-2 integriert.

Die Metallabtrennungsvorrichtung 4-3 ist über eine Leitungsverbindung 4-4a mit einem zweiten Reaktor 4-4 verbunden. Dabei mündet in die Leitungsverbindung 4-4a eine weitere Leitung 4-10a, wie in Figur 4 dargestellt. Somit fließt über die Leitungsverbindung 4-4a, nach der Mündung der Leitung 4-10a in diese, ein Gemisch der in den jeweiligen Leitungssystemen 4-4a und 4-10a vor der Mündung separat transportierten Flüssigkeiten. Auf die Leitung 4-10a wird zu einem späteren Zeitpunkt nochmals gesondert eingegangen.

Der zweite Reaktor 4-4 ist so eingerichtet, dass ihm von außen sowohl Phosphaterz als auch Schwefelsäure zugeführt werden, wie durch die entsprechenden Pfeile in Figur 4 dargestellt. Ebenso kann dem Reaktor 4-4 Phosphorsäure zugeführt werden über die Leitungsverbindung 4-4a. Die Zuführung von Phosphaterz, Phosphorsäure und Schwefelsäure dient dem Erzeugen einer Reaktion zwischen diesen Ausgangsstoffen im Reaktor 4-4. Aufgrund der im Reaktor 4-4 durchgeführten Reaktion wird eine angereicherte Phosphorsäure dritter Konzentration als Reaktionsprodukt erhalten. Ebenso kann als Produkt der Reaktion Phosphorgips entstehen.

Der zweite Reaktor 4-4 ist über eine Leitungsverbindung 4-5a mit einer Vorrichtung zur Kristallisation 4-5 verbunden. Über die Leitungsverbindung 4-5a erhält die Vorrichtung zur Kristallisation 4-5 die Reaktionsprodukte und nicht-reagierten Bestandteile aus dem Reaktor 4-4. Die Vorrichtung zur Kristallisation 4-5 ist eingerichtet, um Bedingungen zu erzeugen, die eine optimale Kristallisation des aufgrund der Reaktion im Reaktor 4-4 möglicherweise entstehenden Phosphorgipses zu ermöglichen. In manchen Ausführungsbeispielen ist die Vorrichtung zur Kristallisation in dem zweiten Reaktor 4-4 integriert.

Die Vorrichtung zur Kristallisation 4-5 ist über eine Leitungsverbindung 4-6a mit einer zweiten Abscheidevorrichtung 4-6 verbunden. Die Leitungsverbindung 4-6a ist ausgebildet, um feste und flüssige Bestandteile aus der Vorrichtung zur Kristallisation, in die zweite Abscheidevorrichtung 4-6 zu leiten.

Die zweite Abscheidevorrichtung 4-6 umfasst eine Vorrichtung zur Fest-Flüssig-Trennung. In manchen Ausführungsbeispielen ist die Vorrichtung zur Fest-Flüssigtrennung als Filtrationsvorrichtung, Sedimentationsvorrichtung oder Zentrifuge ausgebildet. Die Abscheidevorrichtung 4-6 ist eingerichtet, um die über die Leitungsverbindung 4-6a erhaltenen zweiten Feststoffe, die regelmäßig Phosphorgips umfassen, von der ebenfalls über die Leitungsverbindung 4-6a erhaltenen Phosphorsäure dritter Konzentration zu trennen und die zweiten Feststoffe abzuscheiden. Nach der Abscheidung der zweiten Feststoffe aus der Abscheidevorrichtung 4-6 verbleibt in dieser die Phosphorsäure dritter Konzentration.

Direkt an der zweiten Abscheidevorrichtung 4-6 ist die Entnahmevorrichtung 4-7 angeordnet. Die Abscheidevorrichtung 4-6 und die Entnahmevorrichtung 4-7 stehen in Fließverbindung. Die Entnahmevorrichtung ist eingerichtet, dass mit ihr wenigstens ein Teil der Phosphorsäure dritter Konzentration aus der Vorrichtung entnommen werden kann. Im Ausführungsbeispiel der Fig. 4 umfasst die Entnahmevorrichtung eine Ableitungsvorrichtung 4-7a zur Ableitung der Phosphorsäure dritter Konzentration aus der Vorrichtung. Die Ableitungsvorrichtung 4-7a kann als Rohr, Schlauch, oder Ähnliches ausgebildet sein.

Die zweite Abscheidevorrichtung 4-6 ist über eine Leitungsverbindung 4-8a mit einer Vorrichtung zur Filterkuchenwäsche 4-8, 4-9 verbunden. Diese umfasst in dem in Fig. 4 dargestellten Ausführungsbeispiel zwei Filterstufen, 4-8 und 4-9. Andere Ausführungsbeispiele weisen eine andere Anzahl an Filterstufen auf. Die beiden Filterstufen sind über eine Leitungsverbindung 4-9a miteinander verbunden. Die Leitungsverbindungen 4-8a und 4-9a sind eingerichtet, um über sie die aus der zweiten Abscheidevorrichtung 4-6 abgeschiedenen zweiten Feststoffe in die Vorrichtung zur Filterkuchenwäsche 4-8, 4-9 zu leiten.

Die Filterstufe 4-9 ist so eingerichtet, dass ihr von außen Wasser zugeführt werden kann, wie in Fig.4 mittels des betreffenden Pfeiles dargestellt. Mittels des Wassers können die sich in der Filterstufe 4-9 befindlichen festen Rückstände, Filterkuchen genannt, die sich aus den zweiten Feststoffen zusammensetzen, ausgewaschen werden. Durch das Auswaschen des Filterkuchens kann verbliebene Phosphorsäure aus dem Filterkuchen gelöst werden, so dass sich das Wasser mit Phosphorsäure anreichert.

Die Filterstufe 4-9 ist über eine Leitungsverbindung 4-9b mit der Filterstufe 4-9 verbunden. Die Leitungsverbindung 4-9b ist so eingerichtet, dass über sie Wasser aus der Filterstufe 4-9 in die Filterstufe 4-8 fließen kann. Mittels des Wassers kann in der Filterstufe 4-8 analog zur Filterstufe 4-9 Phosphorsäure aus dem Filterkuchen ausgewaschen werden, so dass sich das Wasser abermals mit Phosphorsäure anreichert. Von der Filterstufe 4-8 erstreckt sich eine Leitungsverbindung 4-10a weg. Die Leitungsverbindung 4-10a ist eingerichtet, dass das Wasser aus der Filterstufe 4-8 über sie abgeleitet werden kann. Im Zuge der Filterkuchenwäsche kann sich das abzuleitende Wasser mit Phosphorsäure angereichert haben, so dass es sich bei dem Wasser um eine Phosphorsäure handelt.

In die Leitungsverbindung 4-10a mündet die Leitungsverbindung 4-7b aus der zweiten Abscheidevorrichtung 4-6. Über die Leitungsverbindung 4-7b kann die nicht aus der Vorrichtung entnommene Phosphorsäure dritter Konzentration aus der Abscheidevorrichtung 4-6 in die Leitungsverbindung 4-10a abfließen. Somit fließt in der Leitungsverbindung 4-10a nach der Mündung der Leitungsverbindung 4-7b in diese Phosphorsäure, deren Konzentration sich durch diejenige der in den beiden Leitungsverbindungen 4-7b und 4-10-a enthaltenen Flüssigkeiten vor der Zusammenführung bestimmt.

Aus der Leitungsverbindung 4-10a zweigt sich die Leitungsverbindung 4-1a ab. Diese ist, wie obenstehend beschrieben, mit dem ersten Reaktor 4-1 verbunden. Somit kann über die Leitungsverbindungen 4-7b, 4-10a und 4-1a dem ersten Reaktor insgesamt Phosphorsäure zugeführt werden, wobei die Phosphorsäure zumindest einen Teil der an der Entnahmevorrichtung nicht entnommenen Phosphorsäure dritter Konzentration umfasst.

Durch Zugabe von Wasser im Reaktor 4-1 kann die Konzentration der über die Leitungsverbindung 4-1a zugeführten Phosphorsäure auf die für die Reaktion vorgesehene erste Konzentration eingestellt werden.

Insgesamt bildet die in Fig. 4 dargestellte Vorrichtung einen Kreislauf aus durch die einzelnen Bauteile und Leitungsverbindungen, entlang dem Phosphorsäure verschiedener Konzentrationen fließen kann. Durch ein kontinuierliches Zuführen der Ausgangsstoffe Klärschlammasche, Wasser, Phosphaterz und Schwefelsäure und eine kontinuierliche Entnahme eines Teils der Phosphorsäure ist die Vorrichtung der Fig.4 in der Lage, eine kontinuierliche Phosphorrückgewinnung aus Klärschlammasche zu ermöglichen.

Die Leitungsverbindung 4-10a mündet letztlich in die Leitungsverbindung 4-4a, wie obenstehend bereits beschrieben. Insgesamt wird über die Leitungsverbindungen 4-7b, 4-10a und 4-1a angereicherte Phosphorsäure zum Reaktor 4-1 zurückgeführt, weshalb die in diesen Leitungsverbindungen fließende Phosphorsäure häufig als "Rückstromsäure" (Englisch "return acid") bezeichnet wird. Die in den Reaktor 4-1 über die Leitungsverbindung 4-1a zurückgeführte Phosphorsäure wird zur Extraktion von Phosphor aus Klärschlammasche verwendet. Deshalb wird die in Fig. 4 dargestellte Vorrichtung insgesamt auch als "Vorrichtung zur Rückstromextraktion" bezeichnet, das in ihr durchgeführte Verfahren kann schlicht als "Rückstromextraktion" bezeichnet werden.

## Patentansprüche

1. Verfahren zur Phosphorrückgewinnung aus phosphorhaltiger Klärschlammasche, umfassend:
- in Reaktion bringen der Klärschlammasche mit einer Phosphorsäure erster Konzentration,
- Abscheiden von ersten Feststoffen, wodurch eine Phosphorsäure zweiter Konzentration verbleibt, wobei die zweite Konzentration höher ist als die erste Konzentration,
wobei die Reaktionszeit der Reaktion der Klärschlammasche mit der Phosphorsäure weniger als 2 Minuten beträgt.

2. Verfahren nach Anspruch 1, wobei die Reaktionszeit der Reaktion der Klärschlammasche mit der Phosphorsäure weniger als 1,5 Minuten beträgt.

3. Verfahren nach einem der Ansprüche 1 oder 2, wobei die Reaktionstemperatur der Reaktion der Klärschlammasche mit der Phosphorsäure zwischen 30°C und 40°C, oder unter 20°C, insbesondere zwischen 5°C und 20°C oder zwischen 20°C und 40°C beträgt.

4. Verfahren nach einem Ansprüche 1 oder 2, wobei die Reaktionstemperatur der Reaktion der Klärschlammasche mit der Phosphorsäure zwischen 10°C und 60°C, insbesondere zwischen 20°C und 50°C, 20°C und 40°C oder 50°C beträgt.

5. Verfahren nach einem der vorherigen Ansprüche, wobei die Phosphorsäure erster Konzentration eine Konzentration zwischen 7 Ma.-% und 14 Ma.-% H₃PO₄ aufweist.

6. Verfahren nach einem der vorherigen Ansprüche, wobei die Phosphorsäure zweiter Konzentration eine Konzentration zwischen 14 Ma.-% und 21 Ma.-% H₃PO₄ aufweist.

7. Verfahren nach einem der vorherigen Ansprüche, wobei
- das in Reaktion bringen der Klärschlammasche mit der Phosphorsäure erster Konzentration, und
- das Abscheiden von ersten Feststoffen,
in einem ersten Teilverfahren umfasst sind,
wobei ein zweites Teilverfahren umfasst:
- in Reaktion bringen von Phosphaterz mit Phosphorsäure, wobei die Phosphorsäure zumindest einen Teil der verbleibenden Phosphorsäure zweiter Konzentration des ersten Teilverfahrens umfasst,
- Abscheiden von zweiten Feststoffen, wodurch eine Phosphorsäure dritter Konzentration verbleibt, wobei die dritte Konzentration höher ist als die zweite Konzentration.

8. Verfahren nach Anspruch 7, wobei die Phosphorsäure dritter Konzentration eine Konzentration zwischen 42 Ma.-% und 46 Ma.-% aufweist.

9. Verfahren nach einem der Ansprüche 7 bis 8, wobei im zweiten Teilverfahren das Phosphaterz mit einer weiteren Säure, insbesondere Schwefelsäure, zusammen mit der Phosphorsäure in Reaktion gebracht wird.

10. Verfahren nach einem der Ansprüche 7 bis 9, wobei die Reaktionen des ersten Teilverfahrens und des zweiten Teilverfahrens in verschiedenen Reaktoren stattfinden.

11. Verfahren nach einem der Ansprüche 7 bis 10, wobei das Verfahren als kontinuierliches Verfahren ausgebildet ist,
wobei Ausgangsstoffe der Reaktionen kontinuierlich bereitgestellt werden, wobei Phosphorsäure dritter Konzentration dem Verfahren kontinuierlich entnommen wird.

12. Verfahren nach Anspruch 11, wobei die Phosphorsäure erster Konzentration zumindest einen Teil der nicht entnommenen Phosphorsäure dritter Konzentration umfasst,
wobei die Konzentration des Teils der nicht entnommenen Phosphorsäure dritter Konzentration durch Zugabe von Flüssigkeiten, insbesondere Wasser, eingestellt wird, und
wobei das Verfahren einen Kreislauf ausbildet.

## Claims

1. A process for recovering phosphorus from phosphorus-containing sewage sludge ash, comprising:
- reacting the sewage sludge ash with a phosphoric acid of first concentration,
- precipitation of first solids, whereby a phosphoric acid of second concentration remains, wherein the second concentration is greater than the first concentration,
wherein the reaction time of the reaction of the sewage sludge ash with the phosphoric acid is less than 2 minutes.

2. The process according to claim 1, wherein the reaction time of the reaction of the sewage sludge ash with the phosphoric acid is less than 1.5 minutes.

3. The process according to one of claims 1 or 2, wherein the reaction temperature of the reaction of the sewage sludge ash with the phosphoric acid is between 30°C and 40°C, or less than 20°C, particularly between 5°C and 20°C or between 20°C and 40°C.

4. The process according to one of claims 1 or 2, wherein the reaction temperature of the reaction of the sewage sludge ash with the phosphoric acid is between 10°C and 60°C, particularly between 20°C and 50°C, 20°C and 40°C or 50°C.

5. The process according to one of the preceding claims, wherein the phosphoric acid of first concentration comprises a concentration of between 7 m% and 14 m% H₃PO₄.

6. The process according to one of the preceding claims, wherein the phosphoric acid of second concentration comprises a concentration of between 14 m% and 21 m% H₃PO₄.

7. The process according to one of the preceding claims, wherein
- the reaction of the sewage sludge ash with the phosphoric acid of first concentration, and
- the precipitation of first solids,
are comprised in a first sub-process,
wherein a second sub-process comprises:
- reacting phosphate ore with phosphoric acid, wherein the phosphoric acid comprises at least a portion of the remaining phosphoric acid of second concentration of the first sub-process,
- precipitation of second solids, whereby a phosphoric acid of third concentration remains, wherein the third concentration is greater than the second concentration.

8. The process according to claim 7, wherein the phosphoric acid of third concentration comprises a concentration of between 42 m% and 46 m%.

9. The process according to one of claims 7 through 8, wherein in the second sub-process the phosphate ore is reacted with an additional acid, particularly sulfuric acid, together with the phosphoric acid.

10. The process according to one of claims 7 through 9, wherein the reactions of the first sub-process and the second sub-process take place in separate reactors.

11. The process according to one of claims 7 through 10, wherein the process is designed as a continuous process,
wherein the starting materials of the reaction are continuously supplied, wherein phosphoric acid of third concentration is continuously removed from the process.

12. The process according to claim 11, wherein the phosphoric acid of first concentration comprises at least a portion of the phosphoric acid of third concentration that was not removed,
wherein the concentration of the portion of the phosphoric acid of third concentration that was not removed is adjusted by means of the addition of liquids, particularly water, and
wherein the process forms a cycle.

## Revendications

1. Procédé de récupération de phosphore à partir de cendres de boues d'épuration contenant du phosphore, comprenant :
- la mise en réaction des cendres de boues d'épuration avec un acide phosphorique d'une première concentration,
- la séparation de premiers solides, un acide phosphorique d'une deuxième concentration restant, la deuxième concentration étant supérieure à la première concentration,
le temps de réaction de la réaction des cendres de boues d'épuration avec l'acide phosphorique étant inférieur à 2 minutes.

2. Procédé selon la revendication 1, le temps de réaction de la réaction des cendres de boues d'épuration avec l'acide phosphorique étant inférieur à 1,5 minute.

3. Procédé selon l'une quelconque des revendications 1 ou 2, la température de réaction de la réaction des cendres de boues d'épuration avec l'acide phosphorique étant située entre 30°C et 40°C ou étant inférieure à 20°C, en particulier située entre 5°C et 20°C ou située entre 20°C et 40°C.

4. Procédé selon l'une quelconque des revendications 1 ou 2, la température de réaction de la réaction des cendres de boues d'épuration avec l'acide phosphorique étant située entre 10°C et 60°C, en particulier entre 20°C et 50°C, 20°C et 40°C ou 50°C.

5. Procédé selon l'une quelconque des revendications précédentes, l'acide phosphorique d'une première concentration présentant une concentration en H₃PO₄ entre 7 % en masse et 14 % en masse.

6. Procédé selon l'une quelconque des revendications précédentes, l'acide phosphorique d'une deuxième concentration présentant une concentration en H₃PO₄ entre 14 % en masse et 21 % en masse.

7. Procédé selon l'une quelconque des revendications précédentes,
- la mise en réaction des cendres de boues d'épuration avec un acide phosphorique d'une première concentration et
- la séparation des premiers solides
étant comprises dans un premier procédé partiel,
un deuxième procédé partiel comprenant :
- la mise en réaction de minerai de phosphate avec de l'acide phosphorique, l'acide phosphorique comprenant au moins une partie de l'acide phosphorique d'une deuxième concentration qui reste du premier procédé partiel,
- la séparation de deuxièmes solides, un acide phosphorique d'une troisième concentration restant, la troisième concentration étant supérieure à la deuxième concentration.

8. Procédé selon la revendication 7, l'acide phosphorique d'une troisième concentration présentant une concentration en H₃PO₄ entre 42 % en masse et 46 % en masse.

9. Procédé selon l'une quelconque des revendications 7 à 8, le minerai de phosphate dans le deuxième procédé partiel étant mis en réaction avec un autre acide, en particulier l'acide sulfurique, conjointement avec l'acide phosphorique.

10. Procédé selon l'une quelconque des revendications 7 à 9, les réactions du premier procédé partiel et du deuxième procédé partiel ayant lieu dans des réacteurs différents.

11. Procédé selon l'une quelconque des revendications 7 à 10, le procédé étant conçu comme un procédé continu,
les substances de départ des réactions étant mises à disposition en continu, l'acide phosphorique d'une troisième concentration étant soutiré en continu du procédé.

12. Procédé selon la revendication 11, l'acide phosphorique d'une première concentration comprenant au moins une partie de l'acide phosphorique d'une troisième concentration non soutiré,
la concentration de la partie d'acide phosphorique d'une troisième concentration non soutiré étant réglée par addition de liquides, en particulier d'eau, et le procédé formant un circuit.
